# EUROPEAN PATENT APPLICATION

(11) **EP 4 631 744 A1**
(43) Date of publication of application: **15.10.2025**
(21) Application number: 23900228.0
(22) Date of filing: 27.07.2023
(51) Int. Cl.: B60C 9/08, B60C 9/00, B60C 9/04, B60C 9/20, B60C 15/06

(54) **PNEUMATIC TIRE**

(30) Priority: 06.12.2022 JP 2022195180
(71) Applicant: BRIDGESTONE CORPORATION, Chuo-ku Tokyo 104-8340 (JP)
(72) Inventor: MIYAZONO, Toshiya, Tokyo 104-8340 (JP)
(74) Representative: Marks & Clerk LLP
(86) International application number: PCT/JP2023/027665
(87) International publication number: WO 2024/122099

(57) **Abstract**

Provided is a pneumatic tire comprising a reinforcement layer composed of at least one ply formed of rubber-coated cords, wherein a protective layer formed of a rubber-coated layer of organic fiber cords is disposed to cover an end of the ply, and force at 5% elongation of the organic fiber cord is 2 to 10 N.

## Description

### TECHNICAL FIELD

This disclosure relates to a pneumatic tire.

### BACKGROUND

Pneumatic tires have a reinforcement member composed of a rubber-coated layer of cords (e.g. a belt, a carcass, a chafer, etc.). Because the rigidity is different in tire rubber and the cords, stress is concentrated on the cords (especially, at the ends thereof) in the tire rubber, and this can sometimes cause cracks and lead to failure.

In response to this, in order to alleviate the stress concentration at belt ends, carcass ends, chafer ends, etc., some methods have been proposed to cover the ends of the cords of the reinforcement member with a protective layer, which is formed of a rubber-coated layer composed of rubber and fiber, or to arrange the protective layer along the ends of the cords (see, for example, Patent Document 1).

### CITATION LIST

### Patent Literature

PTL 1: JP 01-099702 U

### SUMMARY

### (Technical Problem)

However, in some cases, the durability of pneumatic tires did not improve sufficiently even with the above method. As a result of research, the inventor has found that one of the reasons why the durability of pneumatic tires is not sufficiently improved is that the protective layer, particularly the ends of the fibers thereof, become new starting points for cracks due to stress concentration.

In view of the above-mentioned problem, an object of the present disclosure is to provide a pneumatic tire with improved durability.

### (Solution to Problem)

The gist of the present disclosure is as follows.
(1) A pneumatic tire comprising a reinforcement layer composed of at least one ply formed of rubber-coated cords, wherein
   a protective layer formed of a rubber-coated layer of organic fiber cords is disposed to cover an end of the ply, and
   force at 5% elongation of the organic fiber cord is 2 to 10 N.

As used herein, the "force at 5% elongation of the organic fiber cord" shall be determined by measuring the force applied when the protective layer is removed from a pneumatic tire and a single organic fiber cord is taken from the layer, and then elongating the single organic fiber cord by 5% (in accordance with JIS L 1095:2010).

Here, the "distance" shall refer the shortest distance between the cord of the reinforcement layer and the organic fiber cord when measured in the direction perpendicular to the extending direction of the cord of the reinforcement layer in a cross-section in the tire width direction.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "applicable rim" mentioned above includes current sizes as well as future sizes to be listed in the aforementioned industrial standards. An example of the "future sizes to be listed" could be the sizes listed as "FUTURE DEVELOPMENTS" in the ETRTO 2013 edition.). For sizes not listed in these industrial standards, the term "applicable rim" refers to a rim with a width corresponding to the bead width of the pneumatic tire. As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

### (Advantageous Effect)

According to the present disclosure it is possible to provide a pneumatic tire with improved durability.

### BRIEF DESCRIPTION OF THE DRAWINGS

In the accompanying drawings:
FIG. 1 is a cross-sectional view in the tire width direction of a pneumatic tire according to one embodiment of the present disclosure;
FIG. 2 is an enlarged view of the vicinity of a bead portion in Figure 1;
FIG. 3 is a drawing that illustrates the first modified example of this embodiment;
FIG. 4 is a drawing that illustrates the second modified example of this embodiment;
FIG. 5 is a schematic view and an enlarged view of the area near the end of a carcass ply;
FIG. 6 is a graph providing the relationship between rigidity of a protective layer and strain;
FIG. 7 is a schematic drawing that explains the shear deformation caused by the relative position of cords in a reinforcement layer and organic fiber cords;
FIG. 8 illustrates a modified example when the reinforcement layer is a belt;
FIG. 9 illustrates a modified example when the reinforcement layer is a wire chafer;
FIG. 10 is a graph providing the physical properties of two types of organic fiber cord;
FIG. 11 is a graph providing the relationship between the force at 5% elongation of the organic fiber cord and the length of the crack near the end of the organic fiber cord or the folded portion;
FIG. 12 is a graph providing the relationship between: the overlap width of the cord in the reinforcement layer and the organic fiber cord, and the length of the crack near the end of the reinforcement layer;
FIG. 13 is a virtual plan view of a narrow inclined belt layer and the protective layer, as seen from the outer side in the tire radial direction; and
FIG. 14 is a graph providing the relationship between the length along the narrow inclined belt layer of the protective layer and the length of crack.

### DETAILED DESCRIPTION

Hereinafter, embodiments of the present disclosure will be described in detail with reference to the drawings.

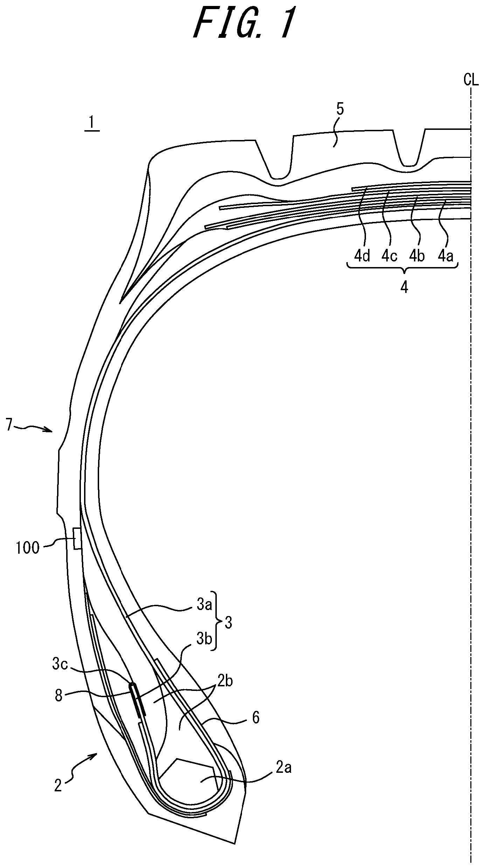

Figure 1 is a cross-sectional view in the tire width direction of a pneumatic tire (hereinafter, simply referred to as a tire) according to one embodiment of the present disclosure. Figure 1 illustrates only one half of the tire in the tire width direction, with the tire equatorial plane CL as the boundary, however, the other half is also of the same structure.

Figure 1 illustrates an example of a heavy-duty tire (for trucks and buses), but the present disclosure can also be used for tires for various other purposes, such as passenger vehicle tires, aircraft tires, and mining tires.

The internal structure of the tire is not particularly limited, but as an example, as illustrated in Figure 1, the tire 1 has a carcass 3 that straddles a pair of bead portions 2 in a toroidal shape, a belt 4 composed of one or more belt layers arranged on the outer side in the tire radial direction of the crown portion of the carcass 3, and a tread 5. A pair of sidewall portions 7 are connected between the pair of bead portions 2 and the tread 5.

In this example, a bead core 2a is embedded in each of the bead portions 2. In addition, a bead filler 2b with a roughly triangular cross-section is arranged on the outer side in the tire radial direction of the bead core 2a. The bead filler 2b can also be composed of a hard portion, and a soft portion lying on the outer side in the tire radial direction of the hard portion. A wire chaffer 6 is arranged around the bead core 2a (on the outer circumferential side of the carcass 3 when viewed from the bead core 2a).

The carcass 3 is composed of one or more carcass plies. The carcass ply is formed of rubber-coated carcass cords. The carcass cord is not particularly limited to any particular type, but may be a steel cord. The carcass 3 has a carcass body portion 3a that straddles the pair of bead portions 2 in a toroidal shape, and a carcass turn-up portion 3b that extends from the carcass body portion 3a and folds around the bead core 2a from the inner side to the outer side in the tire width direction. In the illustrated example, the end of the carcass ply (the end of the carcass turn-up portion 3b) 3c is positioned on the inner side in the tire radial direction, rather than the tire widthwise position.

In the illustrated example, the belt 4 has four belt layers 4a to 4d. In the illustrated example, the belt layer 4a, the belt layer 4b, the belt layer 4c, and the belt layer 4d are arranged in this order from the inner side in the tire radial direction. In this example, the width of the belt layer 4d in the tire width direction is the smallest, and the width of the belt layer 4b in the tire width direction is the largest. Regardless of the above example, the number of belt layers and the width of the belt in the tire width direction can be variously configured.

In addition, each belt layer is made of a belt play formed of rubber-coated belt cords. The belt cord is not limited to any particular type, but may be a steel cord. The belt cords extend such that the cords cross each other between the layers. Although not particularly limited, the inclination angle of the belt cord with respect to the tire circumferential direction may be 10° to 60°, and for heavy-duty tires, it may be 15° to 60°, and preferably 30° to 60°.

The tread 5 is made of tread rubber. For example, the tread rubber may be composed of two or more layers laminated in the tire radial direction. The sidewall portion 7 is made of sidewall rubber.

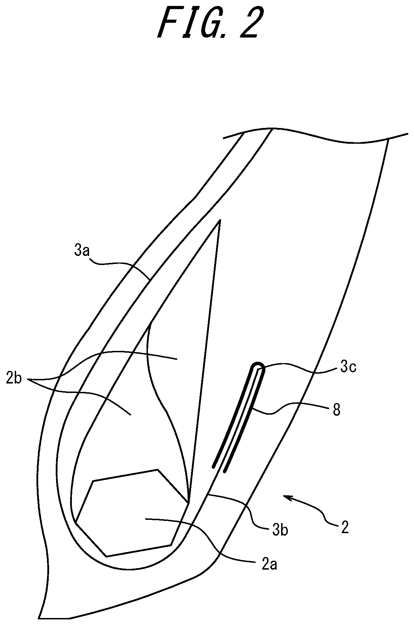

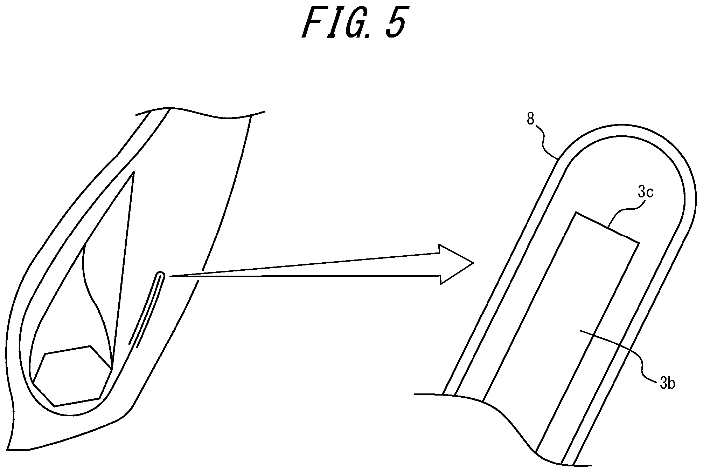

Figure 2 is an enlarged view of the vicinity of the bead portion in Figure 1. As illustrated in Figures 1 and 2, this tire 1 is provided with a protective layer 8 formed of a rubber-coated layer of organic fiber cords covering the end 3c of the carcass ply. Figure 5 is a schematic view and an enlarged view of the area near the end 3c of the carcass ply. In the illustrated example, the protective layer 8 is U-shaped, in other words, the protective layer 8 extends from the inner side to the outer side in the tire radial direction on the inner side in the tire width direction of the ply of the carcass turn-up portion 3b, is folded back near the end 3c of the carcass ply, and extends from the outer side to the inner side in the tire radial direction on the outer side in the tire width direction of the ply of the carcass turn-up portion 3b, thereby covering the end 3c of the carcass ply and its vicinity. The organic fiber cords may be arranged in the form of "Sudare" pattern with warp threads and weft threads, crossing at approximately 90° within the tire. However, the configuration of the organic fiber cords is not limited to the "Sudare" pattern.

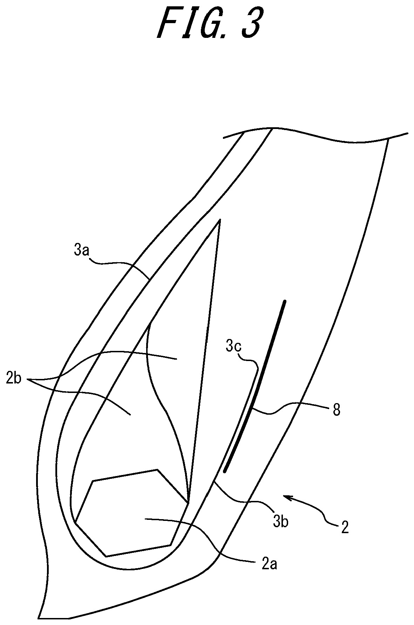

Figure 3 is a drawing that illustrates the first modified example of this embodiment. In this example, the protective layer 8 is only disposed on the outer side of the carcass ply in the tire width direction, and extends from the inner side to the outer side in the tire radial direction beyond the end 3c of the carcass ply.

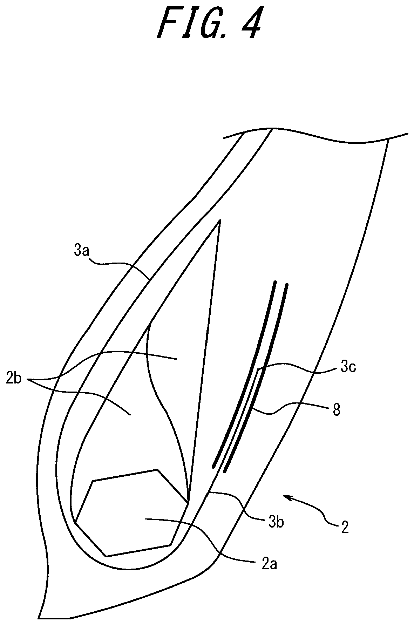

Figure 4 is a drawing that illustrates the second modified example of this embodiment. In this example, the protective layers 8 are disposed on the inner and outer sides of the carcass ply in the tire width direction, and each extends from the inner side to the outer side in the tire radial direction beyond the end 3c of the carcass ply.

As illustrated here, the protective layer 8 may extend, on the outer side and inner side in the tire width direction with respect to the carcass turn-up portion 3b, from the inner side in the tire radial direction of the end 3c of the carcass ply to the tire radial position of the end 3c of the carcass play or to the outer side in the tire radial direction of the end 3c of the carcass ply. In this way, the end 3c of the carcass ply can be covered in various ways.

In addition, the diameter of the organic fiber cord is between 0.04 and 0.60 mm. As the organic fiber, polyester, rayon, nylon, aramid, etc. can be used. In this example, the organic fiber cord has the smallest diameter among all the cords that constitute components of the tire 1 (among the tire components that exist in any cross-section in the tire width direction).

The force at 5% elongation of the organic fiber cord is 2 to 10N.

The effects of the pneumatic tire of the present embodiment will be described below.

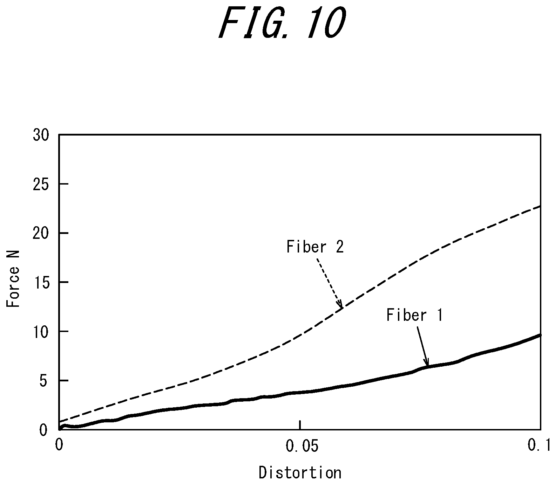

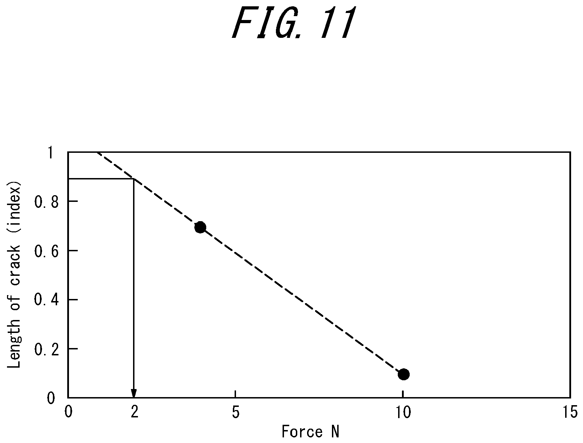

The pneumatic tire 1 of this embodiment comprises a carcass 3 composed of at least one carcass ply formed of rubber-coated carcass cords, and a protective layer 8 formed of a rubber-coated layer of organic fiber cords is arranged to cover the end 3c of the carcass ply. This protects the end 3c of the carcass ply with the protective layer 8, and prevents failures from occurring near the end of the carcass ply. In addition, in the pneumatic tire 1 of this embodiment, the force at 5% elongation of the organic fiber cord is 2 to 10 N. FIG. 11 is a graph providing the relationship between the force at 5% elongation of the organic fiber cord and the length of the crack near the end of the organic fiber cord or the folded portion. As provided in Figure 11, when the index (the smaller the index, the smaller the crack length) is set to 1 for the comparative example (a tire with a protective layer formed of organic fibers that exerts a force of 41 N when elongated), it can be seen that the length of the crack is reduced when using an organic fiber cord whose force at 5% elongation is 4N (Fiber 1 in Figure 10) or 10N (Fiber 2 in Figure 10). If the force at 5% elongation of the organic fiber cord exceeds 10N, it will not be possible to effectively reduce the strain near the end of the organic fiber cord in the protective layer 8 or near the folded portion in the example in Figure 2, on the other hand, if the force at 5% elongation of the organic fiber cord is less than 2N, it will not be possible to effectively reduce the strain near the end of the reinforcement layer. In Figure 11, when the force at 5% elongation of the organic fiber cord was 2N, crack suppression of around 10% was confirmed.

As described above, the pneumatic tire of this embodiment can improve the durability of the tire. The same effect can also be obtained with the modified examples illustrated in Figures 3 and 4. In particular, in the case of the examples illustrated in Figures 2 and 4, it is possible to obtain the effect of suppressing the strain near the end of the reinforcement layer on the inner side and outer side in the tire width direction of the reinforcement layer, and in the case of the example illustrated in Figure 5, it is advantageous for reducing the number of members.

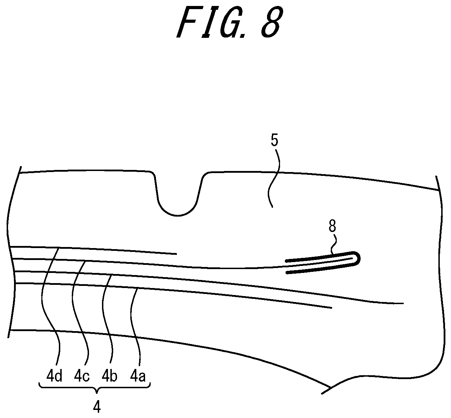

Figure 8 illustrates a modified example when the reinforcement layer is a belt. In the illustrated example in the figure, the protective layer 8, which is formed of a rubber-coated layer of organic fiber cords, covers the end of the narrow inclined belt layer 4c having a shorter width in the tire width direction out of two adjacent inclined belt layers (4b, 4c).

Also in this case, for the same reasons as above, by setting the strain at 2 to 10 N when the organic fiber cord is elongated by 5%, the strain near the end of the belt layer 4c and the strain near the end of the organic fiber cord and folded portion can be suppressed, and the durability of the tire can be improved.

In addition, it is also possible to arrange the protective layer 8 to cover the ends of inclined belt layers 4a, 4b, or 4d.

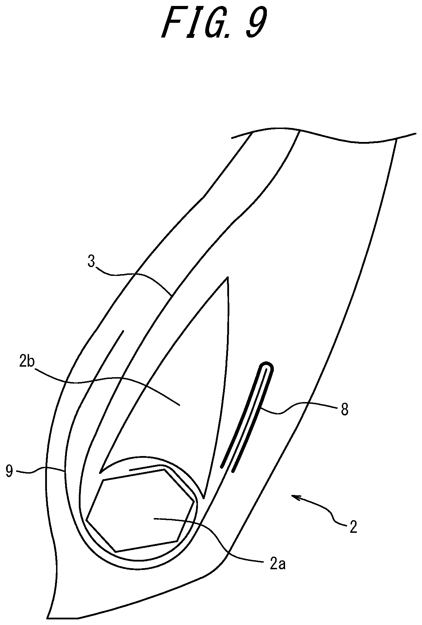

Figure 9 illustrates a modified example when the reinforcement layer is a wire chafer. In the illustrated example in the figure, the protective layer 8, which is formed of a rubber-coated layer of organic fiber cords, covers the end of the wire chaffer 6 (on the outer side of the bead filler 2b in the tire width direction).

Also in this case, for the same reasons as above, by setting the strain at 2 to 10 N when the organic fiber cord is elongated by 5%, the strain at and near the end of the wire chafer 6, and the strain near the end of the organic fiber cord and folded portion can be suppressed, and the durability of the tire can be improved.

It will be noted that even in the cases in Figures 8 and 9, the protective layer 8 can be configured to extend on the outer and/or inner side in the tire radial direction of the belt layer (as a configuration without a folded portion) as exemplified in Figures 3 and 4 in the case of a carcass, or can be configured to extend on the outer and/or inner side in the tire width direction of the wire chafer 6.

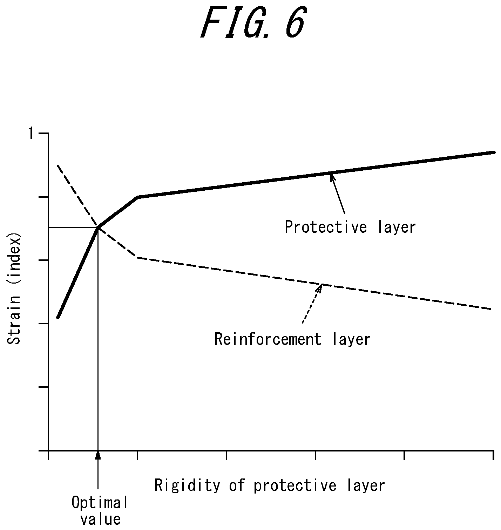

Here, it is preferable that the organic fiber cord has the smallest diameter among cords that constitute components of the pneumatic tire. For example, the diameter of the organic fiber cord in the protective layer 8 is preferably 0.04 to 0.60 mm. Figure 6 is a graph providing the relationship between the rigidity of the protective layer and strain (near the end of the cord in the reinforcement layer and near the end of the cord in the protective layer) (it provides the results of the predictive calculation). As provided in Figure 6, the higher the rigidity of the protective layer 8, the smaller the strain near the end of the carcass cord of the reinforcement layer (carcass in this embodiment) which is to be protected. On the other hand, when the rigidity of the protective layer 8 is high, the difference in rigidity with the rubber will be large, and this will cause greater strain to occur near the end of the organic fiber cord in the protective layer 8 and near the folded portion of the same in the example in Figure 2. If the strain becomes too large and a crack develops in any of these areas, it will cause a tire failure, therefore, the optimal rigidity value for the organic fiber cord can be determined as the rigidity corresponding to the point where "the larger of the strain in the area near the end of the cord in the reinforcement layer and the strain in the area near the end of the organic fiber cord in the protective layer" is small, and the range around that point can be set as the suitable rigidity range. Here, the organic fiber cord has the smallest diameter among all the cords that constitute components of the pneumatic tire, so that it is possible to reduce the strain near the end of the organic firer cord in the protective layer 8 and near the folded portion in the example in Figure 2.

In particular, by setting the diameter of the organic fiber cord in the protective layer 8 to 0.04 mm or more, it is possible to reduce the strain near the end of the carcass cord, which is to be protected, on the other hand, by setting the diameter of the organic fiber cord in the protective layer 8 to 0.60 mm or less, it is possible to reduce the strain near the end of the organic fiber cord in the protective layer 8 and near the folded portion in the example in Figure 2. Therefore, by making the diameter of the organic fiber cord of the protective layer 8 between 0.04 and 0.60 mm, the strain near the end of the carcass cord and the strain near the end of the organic fiber cord of the protective layer 8 and near the folded portion in the example in Figure 2 can be controlled in a well-balanced manner, and the occurrence and progression of cracks can be more reliably controlled.

In addition, it is preferable that the number of the organic fiber cords per unit width is greater than the number of the cords of the reinforcement layer per unit width, and spacing between the organic fiber cords adjacent to each other is 0.1 mm or more. By increasing the number of the organic fiber cords per unit width compared to the number of the cords of the reinforcement layer per unit width, it is possible to further reduce the strain near the end of the reinforcement layer. On the other hand, by ensuring that the spacing between adjacent organic fiber cords is 0.1 mm or more, the distance between the fibers is maintained and the stress intensity factor does not increase, which helps to prevent cracks from occurring.

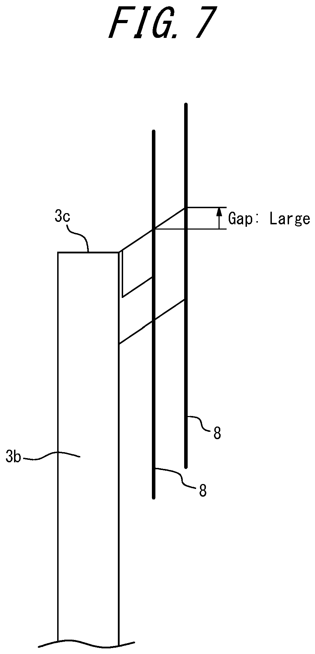

Figure 7 is a schematic drawing that explains the shear deformation caused by the relative position of cords in the reinforcement layer and the organic fiber cords. As illustrated schematically in Figure 7, the greater the distance between the cord of the reinforcement layer and the organic fiber cord, the greater the shear deformation (illustrated schematically as two parallelograms of different sizes).

Therefore, under the reference conditions above, the distance between the cord of the reinforcement layer and the organic fiber cord is preferably 0.2 to 1.0 mm. This is because reducing the distance to 1.0 mm or less can reduce the shear deformation and further improve the durability of the tire. On the other hand, although there is no particular limit, from a manufacturing perspective, it is preferable that the above distance be 0.2 mm or more. It will be noted that, when the above distance is set to 1.0 mm, the indoor test results showed an improvement in tire life of 10%, compared to a tire with a protective layer formed of organic fibers that exerts a force of 41 N when elongated.

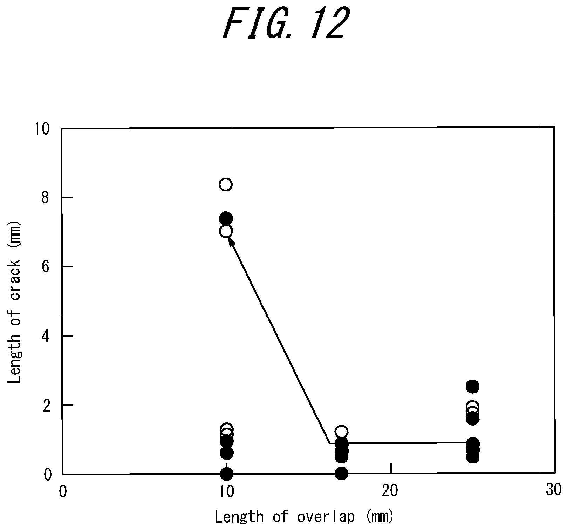

Also, as illustrated in Figure 7, the longer the overlap width (overlap width along the extending direction of the cord of the reinforcement layer) between the cord of the reinforcement layer and the organic fiber cord, the smaller the shear deformation. Therefore, under the reference conditions above, it is preferable that the overlap width between the cord of the reinforcement layer and the organic fiber cord is 10 mm or more. A tire with a tire size of 275/80R22.5 was mounted on a rim with a rim size of 22.5×8.25J, and the tire was examined after being driven for 30,000 km under an internal pressure of 875 kPa and a load of 57.33 kN. Figure 12 is a graph providing the relationship between: the overlap width of the cord in the reinforcement layer and the organic fiber cord, and the length of the crack near the end of the reinforcement layer. As provided in Figure 12, the effect was confirmed when the overlap width was 10 mm or more. On the other hand, although there is no particular limit, even if the overlap width is increased to 17 mm or more, the effect will be saturated, therefore, from the perspective of reducing the number of parts and manufacturing variation, it is preferable to set the overlap width to 17 mm to 30 mm.

In addition, regarding the angle formed between the cord of the reinforcement layer and the organic fiber cord, it is preferable, from a manufacturing perspective, that the angle formed between the cord of the reinforcement layer, and the organic fiber cord that extends in the direction with the greater number of cords per unit width, of the organic fiber cords extending in two intersecting direction, is less than 10°, or the angle formed between the cord of the reinforcement layer and the organic fiber cord that extends in the direction with the less number of cords per unit width, of the organic fiber cords extending in two intersecting direction, is less than 10°.

When the reinforcement layer is the carcass 3, the organic fiber cord of the protective layer 8 has the smallest diameter among cords that constitute components of the pneumatic tire, and at least part of the organic fiber cord is preferably extended to the outer side in the tire radial direction beyond the end of the carcass ply.

Here, the closer the end of the carcass ply or the end of the organic fiber cord, or the vertex position of the folded portion of the organic fiber cord is to the rim flange portion of the bead portion 2, the greater the strain on the vicinity of the end of the carcass ply or the end of the organic fiber cord, or the vertex position of the folded portion of the organic fiber cord. This is due to the repeated deformation of the rubber, sandwiched between the rim flange portion and the turn-up portion of the carcass ply 3b, moving to the outer side in the tire radial direction during the tire is rolling. As a result, there is a concern that sufficient tire life will not be obtained. On the other hand, in the area further on the outer side in the tire radial direction, the bending deformation at the contact area of the bead portion 2 during the tire is rolling increases, and the strain near the end of the carcass ply, the end of the organic fiber cord, and the vertex position of the folded portion of the organic fiber cord increases.

In response to this, in the pneumatic tire 1 of this embodiment, at least part of the organic fiber cord extends to the outer side in the tire radial direction beyond the end 3c of the carcass ply (in this case, the end 3c of the carcass turn-up portion 3b), so that the end 3c of the carcass ply 3c can be positioned relatively close to the rim flange portion to reduce the influence of the bending deformation, and at the same time, so that the end of the organic fiber cord or the vertex position of the folded portion of the organic fiber cord can be positioned away from the rim flange portion to reduce the influence of the repeated deformation. Since the organic fiber cord has the smallest diameter among cords that constitute components of the tire 1, it has low rigidity, and by adopting the above-mentioned arrangement, it is possible to effectively obtain the effect of suppressing the occurrence of cracks by reducing the strain concentration.

Here, the minimum distance between the end of the organic fiber cord or the vertex position of the folded portion of the organic fiber cord and the end of the carcass ply is preferably 5 to 37 mm. By making the minimum distance 5 mm or more and 37 mm or less, the end 3c of the carcass ply can be brought closer to the rim flange portion , while the end of the organic fiber cord or the vertex position of the folded portion of the organic fiber cord can be moved away from the rim flange portion, so that the above-mentioned effect can be obtained effectively.

When the reinforcement layer is a belt layer, it is preferable that a protective layer 8 formed of a rubber-coated layer of organic fiber cords is disposed to cover the end of a narrow width inclined belt layer having a shorter width in the tire width direction out of two adjacent inclined belt layers; the protective layer 8 is folded over at the end of the narrow width inclined belt layer, so that the protective layer extends to the outer side and the inner side in the tire radial direction of the narrow inclined belt layer; the organic fiber cord has the smallest diameter among all cords that constitute components of the pneumatic tire; and with regard to length of the protective layer 8 along the narrow inclined belt layer in a cross-sectional view in the tire width direction, the length (along the narrow inclined belt layer) on the inner side in the tire radial direction of the narrow inclined belt layer is longer than the length (along the narrow inclined belt layer) on the outer side in the tire radial direction of the narrow inclined belt layer.

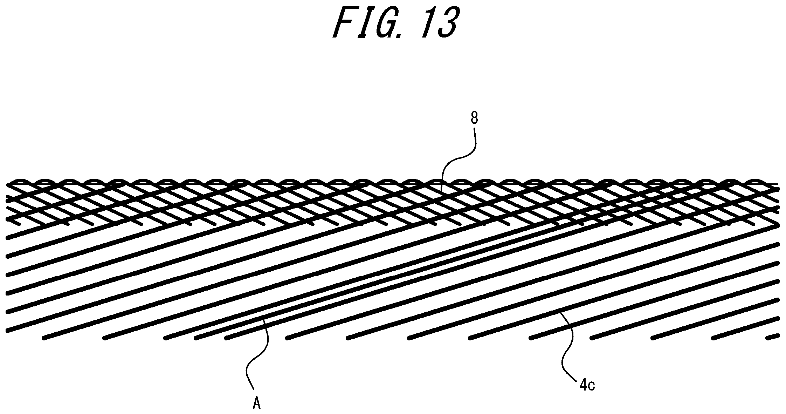

Near the end of the narrow inclined belt layer 4c having a shorter width in the tire width direction out of adjacent inclined belt layers, the strain that causes the cracks involved in the breakdown occurs on the inner side in the tire radial direction of the end of the narrow inclined belt layer 4c. Therefore, by making the length (along the narrow inclined belt layer 4c) on the inner side in the tire radial direction relatively longer, it is possible to effectively suppress the occurrence and development of cracks. Figure 13 is a virtual plan view of the narrow inclined belt layer and the protective layer, as seen from the outer side in the tire radial direction. Since the strain is large on the inner side in the tire radial direction of the narrow inclined belt layer 4c as described above, it is preferable that the extending direction of the organic fiber cords of the protective layer 8 is along the extending direction of the belt cords of the narrow inclined belt layer 4c. On the other hand, when such organic fiber cords are folded back at the end of the narrow inclined belt layer 4c, as illustrated schematically in Figure 13, the organic fiber cords and the belt cords intersect each other. When the various components are assembled while the protective layer is already in place on the narrow inclined belt layer 4c during the tire manufacturing process, the narrow inclined belt layer 4c is cut to a fixed length using a knife or similar tool along the belt cords of the belt layer, and at that time, the organic fiber cords must also be cut (an example of the cut surface is illustrated by symbol A in Figure 13). Therefore, by making the length of the protective layer (along the narrow inclined belt layer) on the outer side in the tire radial direction of the narrow inclined belt layer 4c relatively short, the burden on the manufacturer can be reduced. From this perspective, in this embodiment, with regard to length of the protective layer 8 along the narrow inclined belt layer 4c in a cross-sectional view in the tire width direction, the length on the inner side in the tire radial direction of the narrow inclined belt layer 4c is longer than the length on the outer side in the tire radial direction of the narrow inclined belt layer 4c. It will be noted that if the organic fiber cords are bent into a V-shape, etc., it is also possible to make the extending direction of the organic fiber cords in the protective layer 8 follow the extending direction of the belt cords in the narrow inclined belt layer 4c, even on the outer side in the tire radial direction, which is in the same way as on the inner side in the tire radial direction. However, this would increase the manufacturing cost.

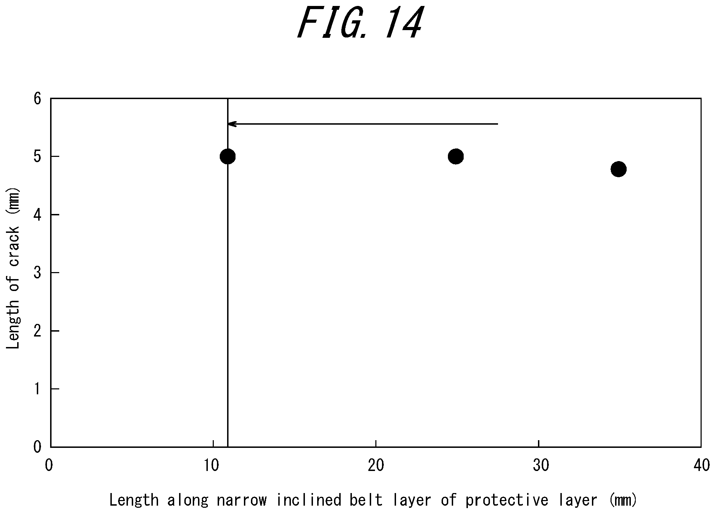

It is preferable that the length of the protective layer 8 (along the narrow inclined belt layer 4c) on the inner side in the tire radial direction of the narrow inclined belt layer is 7 mm or more. Figure 14 is a graph that provides the relationship between the length along the narrow inclined belt layer of the protective layer (on the inner side in the tire radial direction) and the length of crack. It can be seen from the test results that the protective layer is effective when the length along the narrow inclined belt layer is 7 mm or more, when the tire size is 275/80R22.5, the rim size is 22.5×7.5J, the internal pressure is 900 kPa, and the load is 37.19 kN, and the tire has been driven for 100,000 km.

It will be noted that, the "length of the protective layer along the narrow inclined belt layer in a cross-sectional view in the tire width direction" means the overlap width between the protective layer and the narrow inclined belt layer in a cross-sectional view in the tire width direction. Here, the "width in the tire width direction" or the "length" mentioned above shall refer to the dimensions of a pneumatic tire when the tire is mounted on an applicable rim, filled with the prescribed internal pressure, and unloaded. In addition, the "two adjacent inclined belt layers" means that the inclined belts are adjacent to each other. For example, even if a circumferential belt layer composed of reinforcement cords extending in the tire circumferential direction exists between two inclined belt layers, the two inclined belt layers are considered to be adjacent to each other.

The tire may comprise an RF tag as a communication device 100. The RF tag comprises an IC chip and an antenna. For example, the RF tag may be disposed, for example, by being sandwiched between a plurality of members of the same type or different types that make up the tire. This makes it easier to attach the RF tag during tire manufacturing, and improves the productivity of tires comprising the RF tag. In this example, the RF tag may be disposed by being sandwiched between the bead filler and other components adjacent to the bead filler. The RF tag may be embedded in any of the components that make up the tire. In this way, the load applied to the RF tag can be reduced compared to when it is disposed by being sandwiched between a plurality of components that make up the tire. This improves the durability of the RF tag. In this example, the RF tag may be embedded in rubber components such as tread rubber and side rubber. It is preferable that the RF tag is not disposed at positions, at the boundary between components with different levels of rigidity in the direction of peripheral length, which is the direction along the outer surface of the tire in a cross-sectional view in the tire width direction. In this way, the RF tag is not disposed at positions where strain is likely to be concentrated based on the rigidity gap. As a result, the load applied to the RF tag can be reduced. This improves the durability of the RF tag. In this example, it is preferable that the RF tag is not disposed at the boundary between the end portion of the carcass and the components adjacent to this end portion of the carcass (e.g. side rubber) in a cross-sectional view in the tire width direction. The number of RF tags is not particularly limited. A tire may include only one RF tag, or may include two or more RF tags. Here, the RF tag is described as an example of a communication device, but a communication device other than the RF tag may also be used.

For example, the RF tag can be disposed in the tread portion of the tire. In this way, the RF tag will not be damaged by side cuts on the tire. For example, the RF tag may be disposed in the center of the tread portion in the tire width direction. The center of the tread is a position where the deflection is not concentrated in the tread portion. In this way, the load applied to the RF tag can be reduced. This improves the durability of the RF tag. In addition, this also prevents the tire from having differences in communication performance of the RF tag from both outer sides in the tire width direction. In this example, the RF tag may be disposed, for example, within a range of 1/2 of the tread width in tire width direction, with the tire equatorial plane as the center. For example, the RF tag may be disposed at the tread end portion in the tire width direction. If the position of the reader that communicates with the RF tag is predetermined, the RF tag can be disposed, for example, on the tread end portion on one side close to this reader. In this example, the RF tag may be disposed, for example, within a range of 1/4 of the tread width in the tire width direction, with the tread end as the outer end.

The RF tag may be disposed, for example, closer to the tire cavity than the carcass which includes one or more carcass plies straddling bead portions. In this way, the RF tag becomes less susceptible to damage from external impacts to the tire, such as side cuts and nail punctures, etc. As an example, the RF tag may be disposed in close contact with the surface of the carcass on the tire cavity side. As another example, when there is another component closer to the tire cavity than the carcass, the RF tag may be disposed, for example, between the carcass and this other component located closer to the tire cavity than the carcass. An example of another component located closer to the tire cavity than the carcass is an inner liner that forms the inner surface of the tire. As another example, the RF tag may be attached to the inner surface of the tire facing the tire cavity. By having a configuration in which the RF tag is attached to the inner surface of the tire, it is easy to attach the RF tag to the tire, and to inspect and replace the RF tag. In other words, the ease of attachment and maintenance of the RF tag can be improved. In addition, by attaching the RF tag to the inner surface of the tire, it is possible to prevent the RF tag from becoming the core of tire failures, compared to a configuration in which the RF tag is embedded inside the tire. In addition, when the carcass has a plurality of carcass plies and there is a position where the plurality of carcass plies are overlapped each other, the RF tag may be disposed between the overlapped carcass plies.

For example, the RF tag may be disposed, in the tread portion of the tire, on the outer side in the tire radial direction of a belt that includes one or more belt plies. As an example, the RF tag may be disposed on the outer side of the belt in the tire radial direction and in close contact with the same. As another example, when a reinforcement belt layer is provided, the RF tag may be disposed on the outer side of the reinforcement belt layer in the tire radial direction and in close contact with the same. As yet another example, the RF tag may be embedded in the tread rubber on the outer side of the belt in the tire radial direction. By disposing the RF tag, in the tread portion of the tire, on the outer side of the belt in the tire radial direction, communication with the RF tag from the outer side of the tire in the radial direction is less likely to be disturbed by the belt. This improves the communication performance with the RF tag from the outer side of the tire in the tire radial direction. In addition, the RF tag may be embedded in the tread rubber on the inner side of the belt in the tire radial direction. In this way, the outer side of the RF tag in the tire radial direction is covered by the belt, so the RF tag is less likely to be damaged by impacts from the tread surface or by nails sticking into it. As an example of this, the RF tag may be disposed between the belt and the carcass, which is located on the inner side of the belt in the tire radial direction. In addition, when the belt comprises a plurality of belt plies, the RF tag may be disposed between any two belt plies in the tread portion of the tire. In this way, the outer side of the RF tag in the tire radial direction is covered by one or more belt plies, so the RF tag becomes less likely to be damaged by impacts from the tread surface or by nails sticking into it.

In the case of truck and bus tires, the RF tag may be disposed, for example, between cushion rubber and tread rubber, or between the cushion rubber and side rubber. In this way, the impact on the RF tag can be mitigated by the cushion rubber. This improves the durability of the RF tag. In addition, the RF tag may be embedded in the cushion rubber, for example. Furthermore, the cushion rubber may be composed of a plurality of rubber members of the same or different types that are adjacent to each other. In such a case, the RF tag may be disposed by being sandwiched between the plurality of rubber components that make up the cushioning rubber.

The RF tag may be disposed, for example, at a position in the sidewall portion or the bead portion of the tire. For example, the RF tag may be disposed on the sidewall portion or the bead portion on one side that is close to the reader that can communicate with the RF tag. In this way, the communication performance between the RF tag and the reader can be improved. As an example, the RF tag can be disposed between the carcass and the side rubber, or between the tread rubber and the side rubber. For example, the RF tag may be disposed between a position where the tire has a maximum width and a position of the tread surface in the tire radial direction. In this way, compared to a configuration where the RF tag is disposed on the inner side in the tire radial direction of the tire maximum width position, it is possible to improve the communication performance with the RF tag from the outer side of the tire in the tire radial direction. For example, the RF tag may be disposed on the inner side in the tire radial direction of the tire maximum width position. In this way, the RF tag is disposed near the bead portion where rigidity is high. Therefore, the load applied to the RF tag is reduced, which in turn improves the durability of the RF tag. As an example, the RF tag may be disposed at a position adjacent to the bead core in the radial direction or the tire width direction. The area around the bead core is less prone to strain. Therefore, the load applied to the RF tag is reduced, which in turn improves the durability of the RF tag. In particular, it is preferable that the RF tag be disposed on the inner side of the tire maximum width position in the tire radial direction and on the outer side of the bead core in the bead portion in the tire radial direction. In this way, the durability of the RF tag can be improved, while the communication between the RF tag and the reader is less likely to be disturbed by the bead core and the communication performance of the RF tag can be improved. In addition, when the side rubber is composed of a plurality of rubber components of the same or different types that are adjacent to each other in the tire radial direction, the RF tag may be disposed by being sandwiched between the plurality of rubber components that make up the side rubber.

In the case of passenger vehicle tires, the RF tag may be disposed by being sandwiched between the bead filler and the component adjacent to the bead filler. In this way, the RF tag can be disposed in a position where the strain is less likely to be concentrated due to the arrangement of the bead filler. Therefore, the load applied to the RF tag is reduced, which in turn improves the durability of the RF tag. The RF tag may be disposed, for example, by being sandwiched between the bead filler and the carcass. The part of the carcass, that sandwiches the RF tag in place together with the bead filler, may be located on the outer side in the tire width direction with respect to the bead filler, or it may be located on the inner side in the tire width direction with respect to the bead filler. When the part of the carcass that sandwiches the RF tag in place together with the bead filler is located on the outer side in the tire width direction of the bead filler, the load applied to the RF tag caused by impact or damage to the tire from the outside of the tire in the tire width direction can be reduced even more. This makes it possible to further improve the durability of the RF tag. In addition, the bead filler may have a portion that is arranged adjacent to the side rubber. In such a case, the RF tag may be disposed by being sandwiched between the bead filler and the side rubber. Furthermore, the bead filler may also have a portion that is arranged adjacent to a rubber chaffer. In such a case, the RF tag may be disposed by being sandwiched between the bead filler and the rubber chaffer.

In the case of truck and bus tires, the RF tag may be disposed between a stiffener and the component adjacent to the stiffener. In this way, the RF tag can be disposed in a position where the strain is less likely to be concentrated due to the placement of the stiffener. Therefore, the load applied to the RF tag is reduced, which in turn improves the durability of the RF tag. For example, the RF tag may be disposed by being sandwiched between the stiffener and the side rubber. Alternatively, the RF tag may be disposed by being sandwiched between the stiffener and the carcass. The part of the carcass, that sandwiches the RF tag in place together with the stiffener, may be located on the outer side in the tire width direction with respect to the stiffener, or it may be located on the inner side in the tire width direction with respect to the stiffener. When the part of the carcass, that sandwiches the RF tag in place together with the stiffener, is located on the outer side in the tire width direction with respect to the stiffener, the load applied to the RF tag caused by impact or damage to the tire from the outside side of the tire in the tire width direction can be reduced even more. This makes it possible to further improve the durability of the RF tag. The stiffener may also comprise a part that is arranged adjacent to a rubber chaffer. In such cases, the RF tag may be disposed by being sandwiched between the stiffener and the rubber chaffer. The stiffener may comprise a part that is adjacent to a hat rubber on the outer side in the tire width direction. In this case, the RF tag may be disposed by being sandwiched between the stiffener and the hat rubber. The stiffener may be composed of a plurality of rubber components of different hardness. In such a case, the RF tag may be disposed by being sandwiched between the plurality of rubber components that make up the stiffener. The RF tag may be disposed by being sandwiched between the hat rubber and the component adjacent to the hat rubber. For example, the RF tag may be disposed by being sandwiched between the hat rubber and the carcass ply. In this way, the impact on the RF tag can be mitigated by the hat rubber, and this improves the durability of the RF tag.

The RF tag may be disposed, for example, between the rubber chaffer and the side rubber. In this way, the RF tag can be disposed in a position where the strain is less likely to be concentrated due to the disposition of the rubber chaffer. This reduces the load applied to the RF tag, and improves the durability of the RF tag. The RF tag may be disposed, for example, by being sandwiched between the rubber chafer and the carcass. In this way, the load applied to the RF tag due to impact or damage from the rim can be reduced. This improves the durability of the RF tag.

In the case of truck and bus tires, the RF tag may be disposed by being sandwiched between a nylon chafer and another component that is adjacent to the outer side or inner side of the nylon chafer in the tire width direction. In this way, the position of the RF tag is less likely to change when the tire deforms. This reduces the load applied to the RF tag when the tire deforms, and this improves the durability of the RF tag. For example, the nylon chafer may comprise a part that is adjacent to the rubber chafer on the outer side in the tire width direction. In such a case, the RF tag may be disposed by being sandwiched between the nylon chafer and the rubber chafer. For example, the nylon chafer may comprise a part that is adjacent to the side rubber on the outer side in the tire width direction. In such a case, the RF tag may be disposed by being sandwiched between the nylon chafer and the side rubber. For example, the nylon chafer may have a part adjacent to a stiffener on the inner side in the tire width direction. In such a case, the RF tag may be disposed by being sandwiched between the nylon chafer and the stiffener. In addition, the nylon chafer may comprise a part that is adjacent to a hat rubber on the inner side in the tire width direction, for example. In such cases, the RF tag may be disposed by being sandwiched between the nylon chafer and the hat rubber. Furthermore, the nylon chafer may comprise a part that is adjacent to the carcass on the inner side in the tire width direction. In such cases, the RF tag may be disposed by being sandwiched between the nylon chafer and the carcass. Furthermore, the nylon chafer may comprise a part that is adjacent to a wire chafer on the inner side in the tire width direction. In such cases, the RF tag may be disposed by being sandwiched between the nylon chafer and the wire chafer. In this way, the RF tag may be disposed by being sandwiched between the nylon chafer and another component that is adjacent to this nylon chafer on the outer side or inner side in the tire width direction. In particular, when the outer side of the RF tag in the tire width direction is covered with a nylon chafer, the load applied to the RF tag due to impact or damage from the outside of the tire in the tire width direction can be reduced even more. This makes it possible to further improve the durability of the RF tag.

The RF tag may be disposed by being sandwiched between the wire chafer and another component that is adjacent to this wire chafer on the inner side or outer side in the tire width direction. In this way, the position of the RF tag is less likely to change when the tire deforms. This reduces the load applied to the RF tag when the tire deforms. This improves the durability of the RF tag. The another component that is adjacent to the wire chaffer on the inner side or outer side in the tire width direction may be a rubber member, such as a rubber chaffer. This another component that is adjacent to the wire chaffer on the inner side or outer side in the tire width direction may be a carcass.

In the case of passenger vehicle tires, a belt reinforcement layer may be provided on the outer side of the belt in the tire radial direction. For example, the belt reinforcement layer may be formed of a cord made of polyethylene terephthalate that is spirally wound continuously in the tire circumferential direction. The code is made by applying adhesive treatment under a tension of 6.9×10⁻² N/tex or more, and the elastic modulus at a load of 29.4 N measured at 160°C may be 2.5 mN/tex% or more. Furthermore, the belt reinforcement layer may be disposed to cover the entire belt, or it may be disposed to cover only the two ends of the belt. Moreover, the winding density per unit width of the belt reinforcement layer may vary depending on the position in the width direction. In this way, it is possible to reduce road noise and flat spots without reducing high-speed durability.

### EXAMPLES

In order to verify the effectiveness of the pneumatic tire of this disclosure, test tires were manufactured, and their tire life was evaluated through an indoor durability test. Each tire was provided with a reinforcement layer which is composed of at least one ply formed of rubber-coated cords, and a protective layer which is formed of a rubber-coated layer of organic fiber cords, covering the end of the ply of the reinforcement layer. The specifications of each tire are provided in the following Table 1, along with the evaluation results. The indoor durability test was conducted, when the reinforcement layer is a belt layer, using tires of size 275/80R22.5, with a load of 37.19 kN, and a driving distance of 100,000 km, when the reinforcement layer is a carcass ply, using tires of size 275/80R22.5, with a load of 43.95 kN, and a driving distance of 50,000 km, and when the reinforcement layer is a wire chafer, using tires of size 445/50R22.5, with a load of 43.95 kN, and a driving distance of 50,000 km. Regardless of the type of reinforcement layer, the internal pressure was 900 kPa and the rim was 22.5×7.5 J. As a comparative example, a test tire was manufactured, which was provided with a protective layer formed of organic fibers that exerts a force of 41 N when elongated. The results of the evaluation are provided as an index with the comparative example as "1". The smaller the value, the smaller the length of the crack near the end of the reinforcement layer, and the higher the durability of the tire.

**[Table 1]**

| | Example 1 | Example 2 | Example 3 | Example 4 | Example 5 |
|---|---|---|---|---|---|
| End of reinforcement layer covered by protective layer | End of belt layer | End of carcass ply | End of carcass ply | End of carcass ply | End of wire chafer |
| Figure | Figure 8 | Figure 2 | Figure 3 | Figure 4 | Figure 9 |
| Diameter of organic fibre cord (mm) / Diameter of cord in reinforcement layer (mm) | 0.3/1.13 | 0.3/0.86 | 0.3/0.86 | 0.3/0.86 | 0.3/0.86 |
| Force at 5% elongation of organic fibre cord (N) | 4 | 4 | 4 | 4 | 4 |
| Number of organic fibre cords (per 50mm) | 78 | 156 | 78 | 78 | 78 |
| Distance between cord of reinforcement layer and organic fibre cord (mm) | 0.5 | 0.7 | 0.7 | 0.7 | 0.7 |
| Overlap width between cord of reinforcement layer and organic fibre cord (mm) | 15 | 20 | 20 | 20 | 20 |
| Angle foemed between cord of reinforcement layer and the organic fibre cord (°) | Effectively 0 | Effectively 0 | Effectively 0 | Effectively 0 | Effectively 0 |
| Tire life based on indoor durability test (index) | 0.70 | 0.32 | 0.60 | 0.75 | 0.75 |

As can be seen in Table 1, it is clear that the tire duarbility of the example tires 1 to 5 is improved compared to the comparative example. Furthermore, no cracks occured at the end of the protective layer or near the folded portion of the same when the protective layer had the folded portion.

### [Contributing to the United Nations-led Sustainable Development Goals (SDGs)]

The SDGs have been proposed in order to realize a sustainable society. One embodiment of this disclosure is considered to be a technology that can contribute to "No. 12_Ensure Sustainable Consumption and Production Patterns" and "No. 13_Take Urgent Action to Combat Climate Change and its Impacts".

### REFERENCE SIGNS LIST

- 1: Tire
- 2: Bead portion
- 3: Carcass
- 4: Belt
- 5: Tread
- 6: Wire chafer
- 7: Sidewall portion
- 8: Protective layer
- 100: Communication device
- CL: Tire equatorial plane

## Claims

1. A pneumatic tire comprising a reinforcement layer composed of at least one ply formed of rubber-coated cords, wherein
a protective layer formed of a rubber-coated layer of organic fiber cords is disposed to cover an end of the ply, and
force at 5% elongation of the organic fiber cord is 2 to 10 N.

2. The pneumatic tire as described in claim 1, wherein the organic fiber cord has the smallest diameter among cords that constitute components of the pneumatic tire.

3. The pneumatic tire as described in claim 1 or 2, wherein the number of the organic fiber cords per unit width is greater than the number of the cords of the reinforcement layer per unit width, and spacing between the organic fiber cords adjacent to each other is 0.1 mm or more.

4. The pneumatic tire as described in any one of claims 1 to 3, wherein under reference conditions in which the pneumatic tire is mounted on an applicable rim, filled with prescribed internal pressure, and unloaded,
a distance between the cord of the reinforcement layer and the organic fiber cord is 0.2 to 1.0 mm.

5. The pneumatic tire as described in any one of claims 1 to 4, wherein under reference conditions in which the pneumatic tire is mounted on an applicable rim, filled with prescribed internal pressure, and unloaded,
an overlap width between the cord of the reinforcement layer and the organic fiber cord is 10 mm or more.
